# EUROPÄISCHE PATENTSCHRIFT

(11) **EP 2 410 095 B1**
(45) Veröffentlichungstag und Bekanntmachung des Hinweises auf die Patenterteilung: **24.09.2025**
(21) Anmeldenummer: 11006059.7
(22) Anmeldetag: 24.07.2011
(51) Int. Cl.: E03F 1/00, B01D 24/00, E03B 3/02, E03B 3/03

(54) **BEHANDLUNGSANLAGE FÜR REGENWASSER**
TREATMENT SYSTEM FOR RAINWATER
INSTALLATION DE TRAITEMENT POUR EAU DE PLUIE

(30) Priorität: 25.07.2010 DE 102010032198
(43) Veröffentlichungstag der Anmeldung: 25.01.2012
(73) Patentinhaber: Hein-Lingen, Petra, 47669 Wachtendonk (DE)
(72) Erfinder: Lingen, Elena, 47669 Wachtendonk (DE)
(74) Vertreter: Janke Scholl Patentanwälte PartG mbB

(56) Entgegenhaltungen:
- EP-A1- 0 770 735
- EP-A1- 1 803 851
- US-A- 4 136 010
- US-A1- 2004 253 054

## Beschreibung

Die Erfindung betrifft eine unterirdische, im Erdreich verbaute Behandlungsanlage für Regenwasser.

Dem Wunsch nach einem ungeminderten Rückhaltevolumen und/oder einer dauerhaft funktionsfähigen Versickerung wirken die im Wasser mit eingetragenen Sedimente und Schadstoffe massiv entgegen, woraus schon immer Bemühungen resultierten den Zufluss so weit wie möglich von diesen Stoffen zu befreien, die zwangsweise bei Versickerungssystemen früher oder später zu einer so genannten Selbstabdichtung der Versickerungsflächen (innere Kolmation) mit den eingetragenen Stoffen oder deren Umwandlungserzeugnisse führen.

Dies führt insbesondere bei den seit vielen Jahren bekannten herkömmlichen Rigolen aus zumeist Filterkies 8/16 oder 16/32 mm bei der Versickerung von Regenwasser zu zunehmenden Funktionsbeeinträchtigungen im Verlauf der Nutzungszeit, da bei diesen Rigolen das Drainagerohr zumeist mittig in dem, einem Rohrgraben ähnlichen Speicherkörper eingelegt ist, was dazu führt, dass die in den Speicherkörper eingebrachten Sedimente sich unter dem Drainagerohr beginnen abzusetzen, so die Rigolensohle zunehmend abdichten und mit weiterem Sedimenteintrag diese Abdichtung der Versickerungsflächen an den Rigolenseiten fortschreitet bis nach einigen Jahren die Rigole insgesamt abgedichtet und somit funktionsunfähig ist.

Die auf Rigolenhöhe bezogene zumeist mittige Lage des Drainagerohres verhindert zudem eine effektive Reinigung der Rigole, da alle unter dem Drainagerohr im Kies eingelagerten Sedimente nicht mehr ausspülbar sind.

Ist ein Drainagerohr als Zuflussorgan vorhanden, verhindert üblicherweise bereits dessen wasserdurchlässige Schlitzung das Eindringen von Stoffen größer einem Durchmesser von maximal 2,5 mm.

Jedoch kann auch hier nicht der Eintrag von im Wasser gelösten Schadstoffen im Speicher verhindert werden, die aufgrund mikroorganischer Abbauprozesse im Speicherkörper selbst Umwandlungsrückstände, sogenannte Biomasse aus den Rückständen von Mikroorganismen bilden, die sich der Schwerkraft folgend auf der Speicher- bzw. Versickerungssohle zunehmend absetzen und über einen deutlich längeren Zeitraum wie bei bisherigen Rigolen üblich aber dennoch unvermeidlich zu einer Selbstabdichtung und/oder Verringerung des Speicherraums führen.

Die Menge der sich hier absetzenden Stoffe ist abhängig von der eingetragenen Schadstoffmenge sowie dem hydraulische Verhalten des Speichers, der bei z. B. schneller Befüllung und Ableitung den Mikroorganismen kaum Zeit zur Bildung von Biomasse lässt.

Die geringe Verweilzeit behindert demnach jedoch auch die Reinigung des Wassers, so dass dieses das System ggf. mit dem gleichen Verschmutzungsgrad verlässt wie es vorher eingestaut wurde, was insbesondere bei unmittelbar über die Rigolensohle versickernden Systemen die Umwelt belastet.

Um eine weitest gehende Rückhaltung von negativen Einträgen ins Speicher- oder Versickerungssystem zu erzielen, sind leider Anlagen erforderlich, welche die Größe des Speicherkörpers und/oder der Versickerungseinrichtung in nichts nachstehen würden, was besonders beeindruckend an den großen Absetzbecken von kommunalen oder großindustriellen Regenbehandlungsanlagen zu erkennen ist.

Um die daraus resultierenden Kosten nicht ausufern zu lassen sind dem entsprechend die bisherigen Behandlungssysteme nur in der Lage aufgrund der begrenzten Rückhaltung von Sedimente in vorgeschalteten Schachtsystemen die Lebenszeit von Versickerungsanlagen begrenzt zu verlängern.

Aus dem Stand der Technik sind aus den letzten Jahren diverse Möglichkeiten bekannt geworden das in Kanal- oder Speicher-, bzw. Versickerungsrigolen einzuleitende, bzw. zufließende und ggf. stark verschmutzte Regenwasser auf unterschiedliche Weise sinnvoll, insbesondere ökologisch so aufzubereiten, bzw. zu behandeln, dass es die Umwelt nicht mehr schädigen, bzw. z.B. als Brauchwasser weitergenutzt werden kann.

So ist seit Jahrzehnten bekannt, dass die Reinigung von Regenwasser auf eine einfache und effiziente Weise über die sogenannte belebte Bodenzone erfolgen kann, die zumeist aus dem natürlich anstehenden, mikroorganisch aktiven Mutterboden gebildet wird, in dem beim Durchsickern des verschmutzen Wassers dieses insbesondere von den Mikroorganismen gereinigt wird.

Zudem erfolgt vor der Versickerung auf der Oberfläche über die Filterwirkung des Bodens eine Abfiltrierung von Sedimente und groben Verunreinigungen.

Zur Abscheidung, genauer Sedimentation, der im Wasser mitgeführten partikulären Stoffe, an denen sich oft Schadstoffe wie Schwermetalle und dergleichen anhaften, sind seit vielen Jahren Regenklär- oder Sedimentationsbecken als große Betonbauwerke in der kommunalen oder großindustriellen Nutzung.

U. a. von der Firma Fränkische Rohrwerke ist eine aus vielen Kunststoffgitterkästen modular zu formende Füllkörperrigole (Rigo- Fill) bekannt, in der das über Rohre eingeleitete Wasser eingestaut und ebenfalls insbesondere über die unterlagernden Bodenschichten versickert wird. Wegen der ebenen, aufgrund des Kunststoffgitters unzugänglichen und somit nicht spülbaren Rigolensohle wird hier zur präventiven Sedimentabwehr ein im Durchmesser zum normalen Kanaldurchmesser aufgeweiteten Sedimentationsrohr (Sedi-Pipe) für eine Fließgeschwindigkeitsreduzierung unter 0,05 m/s verwendet um damit zu einem absetzen eines Großteils der Sedimente beizutragen.

Diese Systeme können nach Aussage u.a. des Anbieters Fränkischen Rohrwerke ergänzt werden mit anschließenden in Intervallen auszutauschenden, sehr teuren Filtereinheiten (Sedi-Substrator), die insbesondere aus Mineralien bestehen, die das durchsickernde Wasser von Leichtflüssigkeiten und sonstigen verbliebenen Schadstoffen in ausreichendem Umfang befreien können sollen.

Ferner ist aus dem Europäischen Patent EP 0 938 615 eine mehrschichtige Bodenfläche für die Entsorgung von u. a. Regenwasser bekannt, wobei dem innerhalb einer Bodenabdichtungswanne eingebauten hochtragfähigen und porenreichen Schotter über mindestens ein auf der Abdichtung aufliegendes Drainagerohr Wasser zugeführt und wieder abgeleitet wird. Zur Reinigung sind Spülen und mikroorganische Prozesse vorgesehen.

Aus der Europäischen Patentanmeldung EP 01913561.5 ist ein Versickerungssystem bekannt, dass weitestgehend im Oberbau von Verkehrsflächen zu integrieren ist und das über Drainagerohre eingeleitete Wasser insbesondere über die großflächige Sohle des Versickerungssystems in den dieses unterlagernden Boden versickert. Die mit eingetragenen Sedimente sollen dabei weitestgehend beidseitig des auf der Sohle im tiefer liegenden Rohrgraben aufliegenden Drainagerohres verbleiben um von dort bei Bedarf ausgespült werden zu können.

Von u. a. der Firma Eurofiltrator oder Intewa sind Halbschalen als Polygone aus Kunststoff zur Bildung von Kammer- oder Tunnelsysteme zur mit Kiesüberschüttungen kombinierten Bildung von einstauvolumenerhöhten Rigolenkörpern bekannt. Auch dort ist ein präventiver Schutz des Systems gegen innere Kolmation nur im Zufluss vor dem eigentlichen Speicher selbst vorgesehen.

Von der Firma Mall- Beton sind aus Beton gebildete Zisternen mit einer als Versickerungssystem perforierten Betonwandung im Zisternenbereich oberhalb der Brauch- und/oder Löschwassernutzung bekannt um Regenwasser durch Dauereinstau im unteren Bereich zu bevorraten und überschüssiges Wasser im oberen Bereich in den umgebenden Boden zu versickern. Auch bei diesen Systemen findet eine Reinigung nur vor dem Speicher, z. B. über Zentrifugalabscheider (Zyklone) statt.

Von mehreren anderen Herstellern (z. B. Funke Kunststoffe, Betonwerke B. Müller) sind Reinigungssystem bekannt, die am Rand von Verkehrsflächen angeordnet deren abfließendes Regenwasser über in der Versickerungsleistung optimierte künstliche Muldenersatzsysteme (Filtersubstrate) von Sedimente und Schadstoffen reinigen und anschließend versickern. Das Substrat ist nach einer Sediment- oder Schadstoffsättigung gegen neues Substrat auszutauschen.

Aus der EP 0 70000 19.5 ist ein, in Wasserspeicher und/oder Versickerungssysteme aus Speichermineral oder Kunststoffmodule integrierbares, Reinigungssystem für Regenwasser bekannt, dass ergänzend zu den im Speichermineral angeordneten physikalischen Filter-, Sedimentations- und Absetzanlagen aus Vliesen und/oder Folien, in einer weiteren Ausgestaltungsform natürliche Reinigungsverfahren in die Entwässerungsanlagen integriert.

So sind neben den in die Speicher- und/oder Rigolenkörper integrierten physikalischen Verfahren zur Absetzung und/oder Filtration, auch zusätzlich oder Alternativ, Adsorption und/oder Fällung, Ionenaustausch und/oder biologischer Abbau, usw. von Schadstoffe möglich.

Dieses ggf. breite Reinigungsspektrum ist vorzugsweise über ein zusätzlich in die Rigolen einbringbares und/oder unterlagerndes Granulat mit großer Oberfläche (z. B. Lava, Bims, Aktivkohle, Fasern, Splitt, Sand, etc.) zu realisieren, welches als Träger für natürliche Reinigungsmedien und/oder als Besiedlungsraum für Mikroorganismen für die gewünschten Reinigungsstufen dienen soll.

Alternativ kann auch das den Speicher oder die Rigole bildende Granulat direkt mit einem für diese Aufgabe geeigneten Material gemischt werden, was insbesondere deswegen sinnvoll sein kann, da gebrochenes Granulat aus natürlichem Gestein für Mikroorganismen gut besiedlungsfähige, bzw. für eine entsprechende Nähr- oder Reinigungslösungen gut haftende Oberfläche bietet.

Die Reinigungskomponenten können jedoch auch über z. B. in das Speichermineral des Speichers oder der Rigole eingemischte Fasern oder Mikroröhrchen in den Speicher oder die Rigole eingebracht werden.

Bei Rigolen kann unterlagerndes Granulat auch direkt aus einem für Versickerungsmulden geeigneten Mutterboden gebildet sein.

In den folgenden Ausführungen ist zu beachten, dass neben den Fränkischen Rohrwerken noch diverse andere Anbieter Speichermodule aus Kunststoff anbieten, die teilweise auch mit einem in Längsrichtung durch das Speichermodul führenden Tunnel mit wasserdurchlässiger Wandung ausgeführt sind.

Diese Bauteile sind herkömmlichen Rigolen, gebildet aus Speichermineral und Drainrohr, in Bauweise und Funktion gleich zu setzen und daher neben den üblichen Kunststoffmodulen ohne Tunnel ebenfalls für eine Ausrüstung mit der vorstehenden Technik und der hier behandelten Erfindung eines modularen Regenwasserbehandlungssystems geeignet.

Ebenso geeignet für eine Ausrüstung mit dem Behandlungssystem sind Kammer- oder Tunnelsysteme aus Halbschalen aus Kunststoff, wie sie z.B. von der Fa. Eurofiltrator oder Intewa angeboten werden.

Ergänzend zu diesen am weitesten verbreiteten Techniken gibt es auch noch vergleichbare Funktionsweisen von Speicher und Rigolen aus Beton oder Metall (in Rohr oder Kastenbauweise), die sich genauso zur Aufnahme oder Integration mindestens einer der miteinander kombinierbaren Behandlungsstufen eignen.

Um die Erfindung jedoch nicht in allen Facetten für die unterschiedlichen Speicherbauteile (Speichermineral, Kunststoff, Beton, etc.) beschreiben zu müssen, wird diese Beschreibung weitestgehend auf eine Integration der Behandlungsanlage in Speichermineral beschränkt, ohne damit die vorgenannten sonstigen Anwendungsfelder in Kunststoffmodule, Beton, Metall oder sonstiges auszuschließen.

Reinigungsprozesse je nach Reinigungsbedarf aus bionischen und/oder physikalischen und/oder chemischen Verfahren, bzw. Reinigungskomponenten nachzubilden und entweder als nur eine erfindungsgemäße Reinigungsstufe oder im Verbund mit weiteren auszuführen und ggf. mit vor- oder nachgeschalteten Reinigungssystemen sinnvoll zu kombinieren oder zu ergänzen, ist Aufgabe dieser Erfindung.

Die erfindungsgemäßen Behandlungsanlagen sind dem entsprechend vorzugsweise aus zumindest einer, bei entsprechendem Bedarf jedoch aus verschiedenen erfindungsgemäßen Reinigungsstufen, bzw. Komponenten kombinierbar, und vorzugsweise abgestimmt auf die zu erwartende Schmutzfracht, auszulegen.

Der Erfindung liegt daher die Aufgabe zu Grunde eine vor und/oder innerhalb eines Kanalnetzes oder eines aus Kunststoff-, Beton-, Metallbauteilen und/oder Schüttgütern gebildeten Speicherkörper anzuordnende Behandlungsanlagen zu schaffen, die je nach Komponentenauswahl eine teilweise bis weitestgehende Behandlung, bzw. Umwandlung durch Abscheidung, Filtrierung, Fällung und/oder mikroorganische, bzw. chemische Aufbereitung der mit dem Wasser zufließenden Sedimente, Schwebstoffe und/oder sonstigen Schadstoffen ermöglicht, bevor eine Funktionseinschränkung des nachfolgenden Entwässerungssystems, ggf. genutzten Brauchwassers oder gar eine Umweltbelastung auftreten kann.

Als einzeln oder miteinander beliebig kombinierbare Behandlungskomponenten kommen erfindungsgemäß in Betracht:
1. Schlammfänge zum Absetzen grober Verschmutzungen,
2. Sedimentationsanlagen zum Sedimentieren bis hin zu leichtesten Schwebstoffen,
3. Einstufige bis mehrstufige Filter aus z.B. Geotextilien, Filtervliese, perforierten Blechen, Sintermetallen, Schaumstoff und dergleichen,
4. Tauchwände zur Schwerkraftabscheidung von Leichtflüssigkeit,
5. Koaleszenzabscheider zur Abscheidung von Leichtflüssigkeit
6. und (bionische) Filtersubstrate in allen denkbaren, an die erwartete Schmutzfracht angepassten Zusammensetzungen.

Zentrales Bauteil, in dem, bzw. um das herum sich die erfindungsgemäße, bzw. erfindungsgemäßen Regenwasserbehandlungen vollziehen ist eine Drainleitung, bzw. ein Drainelement, dass aus runden oder eckigen Rohren als auch aus kubischen oder polygonen Bauteilen herzustellen ist, die aus allen erdenklichen Baustoffen von Beton bis Kunststoff bestehen können.

Bei kubischen Bauteilen (z.B. Rigo-Fill) kann es durchaus Sinn machen, die Behandlungsanlage aus vielen kubisches Bauteilen zu einer bedarfsgerechten Größe herzustellen und z.B. außerhalb, seitlich oder inmitten einer aus Schüttgut und/oder Kunststoff gebildeten Versickerungsrigole oder Wasserspeichers zu platzieren, dass Wasser dorthin über Kanalleitungen zu befördern und dieses in der Behandlungsanlage zu reinigen und anschließend in die eigentliche Rigole, bzw. Speicher einströmen zu lassen.

Zu einer entsprechend leistungsfähigen Behandlungsanlage können zudem mehrere erfindungsgemäße Behandlungsanlagen in einem Speicher- oder Rigolenkörper integriert sein.

In Reihe geschaltet können diese Behandlungsanlagen mit identischen oder unterschiedlichen Behandlungsverfahren ausgestattet sein.

Auch kann es sinnvoll sein die Behandlungsanlage in mehrere Reinigungsschritte aufzuteilen, die sich z.B. teilweise in einer ggf. kombinierten Behandlungsanlage im Zuflussbereich und einer ggf. kombinierten Behandlungsanlage im Abfluss aufteilen.

Die Behandlungsanlagen im Zufluss und Abfluss können dazu parallel zueinander verlaufen oder in Reihe hintereinander angeordnet sein. Auch eine beliebige Anordnung der beiden Behandlungsanlagen im Speicher- oder Rigolenkörper ist denkbar.

Sind die beiden Behandlungssysteme innerhalb des Speichermediums räumlich getrennt, kann der von einer Behandlungsanlage zur nächsten zu durchströmende Zwischenraum zur weiteren Reinigung, z.B. mit Filtervliesen oder Filtersubstraten ausgestattet sein.

Zumeist werden die Behandlungsanlagen sowohl im Zufluss als auch im Abfluss an Schachtbauwerken angeschlossen sein, die auch selbst wieder Behandlungsstufen beinhalten können.

So wäre es nicht ungewöhnlich im Zufluss und/oder Abfluss der erfindungsgemäßen Behandlungsanlagen mindestens eines der üblichen und zum Stand der Technik gehörenden Reinigungsverfahren mit zu integrieren.

Es ist jedoch auch möglich die Behandlungsanlage ohne Schachtbauwerk im Zu- und/oder Abfluss in unmittelbarem Anschluss an die zu- und/oder ableitende Kanalleitung zu betreiben.

In der Entwässerung von z.B. Straßen dient eine solche erfindungsgemäße Behandlungsanlage zumeist primär der Sedimentation von groben bis hin zu kleinsten Sedimenten und dem Rückhalt von Leichtflüssigkeiten.

Um eine Sedimentabscheidung herbei zu führen ist die Reduzierung der Fließgeschwindigkeit und Schaffung einer möglichst großen Wasserspiegelfläche erforderlich, damit die starke weitestgehend horizontale Strömung des Wassers aus der Rohrleitung kommend reduziert wird und sich die Stoffe aufgrund der vom Fachmann im allgemeinen auf <0,05 m/s zu reduzierenden Strömung herabsetzen kann.

Zudem ist darauf zu achten, dass die Absetzwege und -zeiten möglichst kurz gehalten werden, damit sich auch kleinste Sedimente absetzen und nicht schon vorher mit dem Wasser aus der Anlage ausgetragen werden können.

Die Strömungsreduzierung ist erfindungsgemäß vorzugsweise durch eine
- große Grundfläche und/oder
- einen über den hydraulischen Bedarf hinausgehenden Querschnitt,
der Drainleitung oder des Kubus zu bilden.

Insbesondere unter Zuhilfenahme von Drainleitungen lassen sich einfach große Querschnitte zu einer massiven Strömungsreduzierung erzielen, da das aus den Drainleitungen über die oft große Länge der Drainleitung austretende Wasser, sich zu beiden Seiten quer zum Drainrohr aus diesem heraus bewegt und dabei extrem stark in der Fließbewegung abgebremst wird.

Die zum Bau der Sedimentationsanlage zu verwendeten Bauteile bestehen insbesondere aus geschlitzten Drainleitungen beliebigen Querschnitts und/oder geschlitzten Halbschalen (Eurofiltrator, Intewa) und/oder kubischen aus offenem Gitterwerk bestehenden Rigolenfüllkörpern (Rigo-Fill von den Fränkischen Rohrwerken), welche auch mit einem Tunnel ausgestattet sein können (Rigo-Fill-Inspect von den Fränkischen Rohrwerken).

Soll eine erfindungsgemäße Strömungsreduzierung in einem kubischen Bauteil erfolgen, ist dieses vorzugsweise als Beton- oder Stahlbehälter oder aus Kunststoffblöcken, die zudem auch horizontal und/oder vertikal zu größeren Querschnitten angeordnet sein können, zu bilden.

Ergänzend zum Einbau in ein umgebendes Speichermedium aus Speichermineral, Kunststoffmodule, Beton oder Metall, kann die modulare Behandlungsanlage auch in ein diese umhüllendes Rohr eingebaut sein.

Ist die Behandlungsanlage in eine Kanalleitung als Speichermedium angeordnet ist dieses Umhüllungsrohr dicht gegen Wasseraustritt herzustellen und mittels eines Abflussrohrs mit dem nachfolgenden Kanal, Speicher oder Rigole zu verbinden.

Die Abdichtung der Behandlungsanlage kann in solchen Fällen auch über ein zusätzliches Bauwerk erfolgen, das z.B. aus Beton, Metall oder Kunststoff als z.B. übergestülptes Mantelrohr oder einem eckigen Behältnis ausgeführt sein kann.

Die so als Leitung oder Kubus ausgebildete Behandlungsanlage ist bereits alleine nur über die Grundflächen und/oder Querschnittsvergrößerung in der Lage eine erhebliche Abscheidung von Sedimente aus dem zufließenden Wasser zu ermöglichen.

Nun hat die jüngste Forschung zu der Erkenntnis geführt, dass mit dieser Sedimentation nicht die kritischsten Stoffe aus dem Wasser zu entfernen sind, da diese Sedimente anhaften die im Korndurchmesser kleiner 60 µm sind und somit mit einer einfachen Sedimentation nur begrenzt zurück gehalten werden können.

Eine Möglichkeit die Sedimentation zu optimieren ist das einbringen von aus übereinander angeordneten Lamellenblättern gebildeten Lamellenpaketen innerhalb der Behandlungssanlage.

Dazu befinden sich üblicherweise mindestens eines bis hin zu einer Vielzahl von Lamellenpakete in Strömungsrichtung hintereinander.

Werden diese vom Wasser angeströmt erfolgt über die übereinander angeordneten und vorzugsweise nach oben ansteigenden Lamellenblätter eine Umlenkung des Wassers nach oben, wobei u.a. über die größere Dichte der Sedimente gegenüber dem Wasser diese sich schneller in Richtung Lamellenblatt bewegen und sich am Lamellenblatt absetzen können.

Je dichter die einzelnen Lamellenblätter übereinander angeordnet werden, je kürzer ist der Absetzweg des Sediments aus dem Wasser.

Ebenso kann ein langer Überströmungsweg über das Lamellenblatt die Absetzung begünstigen.

Dichter Lamellenabstand und langer Überströmungsweg bei gegen die Strömung angestellten Lamellenblättern bringen demnach eine verbesserte Abscheideleistung.

Über die Schrägstellung der Lamellenblätter tritt zudem ein Selbstreinigungsprozess ein, da die abgeschiedenen Sedimente bei nachlassender Strömung das Lamellenblatt herunter gleiten und von dort, in der Zeitspanne wo kein weiterer Zufluss erfolgt, nach unten in den üblicherweise vorhanden Absetzraum absinken oder herunterfallen können.

Diese Selbstreinigung wird bei nicht trockenfallenden, dauereingestauten Lamellenpaketen über das ausbleibende austrocknen und ankrusten der Sedimente am Lamellenblatt noch begünstigt. Unterstützt werden kann das abgleiten der Sedimente von den Lamellenblättern zudem, wenn diese zusätzlich mit einem Lotuseffekt versehen werden, was ein anhaften jeglicher Stoffe verhindern kann.

Die für Abscheidung und Sedimentation optimale Reinigungsleistung kann erzielt werden, wenn ergänzend zu den vorstehenden Maßnahmen auch noch die Verweilzeit in der Behandlungsanlage möglichst lang gestreckt wird umso auch den kleinsten Sedimenten ein Absetzen zu ermöglichen.

Doch auch eine Sedimentation über Lamellenpakete bewirkt i.d.R. keine ausreichende Abscheidung der ggf. hochbelasteten Kleinstsedimente.

Dies wird erst über eine Filtration über entsprechende Filtervliese oder Filtersubstrate möglich.

Die einfachsten Filter können über Geotextilien, besser noch Filtervliese gebildet werden.

Filterstabile Fliese für verschiedene Filterstufen sind bereits heute aus dem Rigolenbau oder vergleichbaren Anwendungen als Trenn- oder Rieselschutzvlies zwischen oder innerhalb von Rigole und angrenzenden Bodenschichten bekannt.

Abweichend von dieser bekannten Anwendung im Rigolenbau, bei der es jedoch i.d.R. nicht ums Filtern, sondern primär ums Verhindern von Bodeneinträgen aus dem Randbereich in die Rigole geht, ist es in dieser Erfindung vorgesehen das Filtervlies in die Behandlungsanlage hinein zu integrieren.

Das Filtervlies ist dazu in einer ersten Ausgestaltungsform als letzte Behandlungsstufe vor dem Austritt des Wassers aus der Behandlungsanlage in den Speicher oder die Rigole vorzusehen.

So kann es z.B. über entsprechende Halterungen oder Vorrichtungen mit vorbemessenem Abstand zu den Abflussquerschnitten in der Behandlungsanlage angeordnet sein.

Ebenso kann es als Ergänzung von Lamellenpaketen diese am, z.B. in Strömungsrichtung, seitlichen Rand umschließen und so nur dort und darüber bereits sedimentiertes Wasser abschließend zu filtern um es danach aus der Behandlungsanlage abfließen zu lassen.

Sofern keine Gefahr der Selbstabdichtung der Behandlungsanlage besteht, kann das Filtervlies auch unmittelbar vor oder hinter den Abflussquerschnitten der Behandlungsanlage angeordnet werden, was bedeutet, dass das Filtervlies auch an der Außenwandung der Behandlungsanlage anliegen kann.

Da Filter strömungsseitig zum Aufbau von aus abgefiltertem Material bestehenden Filterkuchen neigen, ist darauf zu achten, dass dies nicht zu einem Verschluss des Abflusses führt.

Dem zu begegnen sind die Filtervliese z.B. mit einem entsprechenden Abstand zu den Abflussquerschnitten (z.B. Drainrohrschlitzung oder Abflussrohranschluss) anzuordnen, so dass ein ausreichender Filtervliesdurchgang über die Größe der Filtervliesfläche solange wie möglich bestehen bleibt und der Raum hinter dem Filtervlies ausreicht das über die große Filtervliesfläche durchdringende Wasser in der geforderten Menge zu den Abflussquerschnitten gelangen zu lassen.

Um auch bei kompletter Abdichtung des Filtervlieses oder Starkregenereignissen die Funktion der Anlage in den sonstigen Behandlungsschritten aufrecht zu erhalten, können die Filtervliese an sinnvoller Stelle mit Überstauentlastungen ausgerüstet werden, die das nicht durch das Filtervlies dringende Wasser über diese Überstauentlastungen ungefiltert innerhalb der Behandlungsanlage weiterleiten oder aus dieser heraus leiten können.

Damit dies nicht grundsätzlich geschieht können diese Überstauentlastungen z.B. entweder im Querschnitt hydraulisch reduziert oder hydrostatisch auf höheren Druck reagierend ausgeführt sein.

Die hydraulische Wirksamkeit kann auch noch dadurch vergrößert werden, dass das Filtervlies zur Flächenvergrößerung in hin- und hergehendem Zickzack- Muster in das Entwässerungssystem eingebaut wird, wie es z. B. von Luftfiltern im Automobil bekannt ist.

Um eine möglichst umfassende Abfiltrierung nicht nur der Sedimente, sondern auch der Schwebstoffe aus dem Wasser zu erzielen kann es durchaus Sinnvoll sein nicht nur ein Filtervlies, sondern mit gewissem Abstand mehrere Filtervliese unterschiedlicher Filterstufen in Strömungsrichtung nacheinander innerhalb der Behandlungsanlage anzuordnen, wobei die Filterstufen in Strömungsrichtung zunehmend feinere Sedimente bis hin zur Schwebstofffiltrierung ausführen können.

Dieses mehrstufige Filterverfahren kann in einer anderen Ausgestaltungsform auch in nur ein, dabei jedoch dem entsprechend dickes, bzw. mehrlagiges Filtervlies ohne Zwischenabstand integriert werden.

Um bei zunehmend sich abdichtenden Filterfliesen den Filterkuchen zu entfernen kann von außen ein Druck- und/oder von innen ein Saugspülverfahren entgegen der betriebsbedingten Strömungsrichtung zum ablösen des Filterkuchens Verwendung finden und/oder die Filtervliese als austauschbare einzelne Elemente in der Behandlungsanlage vorgesehen werden, um diese z.B. aus der Anlage zu entnehmen, außerhalb zu reinigen und danach wieder in diese einzusetzen.

Egal wie das Reinigungssystem als Filter- und/oder Absetzeinrichtung arbeitet; es verbleiben in zunehmendem Umfang Sedimente im Speicherraum der Behandlungsanlage und reduzieren diesen dem entsprechend.

Es ist daher für eine dauerhafte Funktionsfähigkeit unerlässlich die Sedimente von Zeit zu Zeit aus dem System hinaus zu spülen und aus einem mit der Anlage verbundenen Revisionsbauwerk abzusaugen. Um diesen Reinigungsvorgang effizient zu gestalten sind die Behandlungsanlagen vorzugsweise so zu konstruieren, dass sich die Sedimente mit der herkömmlichen Spültechnik aus der Kanalreinigung schnell und einfach reinigen lassen.

Die bisherigen aufgezeigten erfindungsgemäßen Behandlungsverfahren, bzw. baugruppen beschränkten sich ausschließlich auf die Rückhaltung von Sedimente bis hin zu Schwebstoffe.

Diese stellen jedoch nur einen Teil der möglichen Schadstoffe dar. Aus Umweltgesichtspunkten kritischer zu bewerten sind die im Wasser gelösten oder am kleinsten Sediment anhaftende Schadstoffe von z. B. Kohlenwasserstoffe bis hin zu Schwermetalle, die neben den Verkehrsabflüssen auch von Metalldächern herrühren können.

Diese Schadstoffe konnten lange nur über die natürlich belebte Bodenzone einer an der Oberfläche angeordneten Versickerungsmulde oder seit einigen Jahren auch über Filtersubstrate abgefiltert werden, die in straßenbegleitenden Rinnen oder unterirdischen Schächten zunehmend Anwendung finden und insbesondere als austauschbare Filtersubstratschüttungen oder Filtersubstratpatronen angeboten werden.

In einer weiteren Ausgestaltungsform der Erfindung soll die natürliche Funktionsweise des Abbaus der verbliebenen Schadstoffe so weit wie möglich, bzw. erforderlich innerhalb und außerhalb der Behandlungsanlage nachempfunden werden.

So sind neben den bereits angesprochen physikalischen Verfahren Absetzung und/oder Filtration noch Adsorption und/oder Fällung, Ionenaustausch und/oder biologischer Abbau, usw. von Schadstoffe erwünscht und mit dem Erfindungsgegenstand auch möglich.

Dieses ggf. breite Reinigungsspektrum ist vorzugsweise über ein zusätzlich in die Behandlungsanlagen einbringbares Filtersubstrat zu realisieren, welches u.a. als Träger und/oder mikroorganischer Besiedlungsraum für die gewünschten Reinigungsschritte dienen soll.

Die Integration der Filtersubstrate in die Behandlungsanlage erfolgt in separaten, vorzugsweise zur Revisionszwecken demontierbaren Bauelementen händelbarer Größe, in die das Filtersubstrat als loses Schüttgut oder als formstabile Blöcke eingebracht werden kann.

Für Filtersubstrate aus Schüttgut sind immer entsprechende Bauteile vorzusehen, welche die Filterschüttgüter in entsprechender Dicke und Fläche aufnehmen können.

Sind die Filtersubstrate in formstabilen Filterblöcken, bzw. -patronen hergestellt, können diese in der Formgebung so in ihren Abmessungen ausgeführt sein, dass diese direkt ohne weitere ergänzende Bauteile in die Behandlungsanlage einzusetzen sind.

Bei allen Formgebungen für die Filtersubstrate, egal ob lose geschüttet oder Formstabil, ist vorzugsweise mit darauf zu achten, dass das durchströmende Wasser einen optimalen Filterweg im Filtersubstrat durchsickern kann.

Da auch bei den Filtersubstraten eine zunehmende Selbstabdichtung auftreten wird, gelten auch hierzu alle bereits bei den Filtervliesen aufgeführten Schritte zur Funktionssicherung, inkl. einer auch in diese Bauteile mit integrierbaren Überstauentlastung, egal wie diese sinnvoller Weise auch aussehen mag.

Sind bisher alle Behandlungsschritte weitestgehend auf das innere der Anlage begrenzt, trifft dies auf die Filtersubstrate nicht zu.

Diese können für sich alleine oder in Kombination mit integrierten Filtersubstraten oder sonstigen Behandlungsstufen auch innerhalb oder unterhalb des Speichermediums angeordnet sein, egal ob dieses aus Speichermineral, Kunststoffmodule, Beton- oder Metallbauteile gebildet wird.

In Blockbauweise können die Filtersubstrate bei entsprechnder Festigkeit auch aus sich heraus als das Speichermedium ganz oder teilweise unterlagerndes, die aufkommenden Flächen- und Verkehrslasten eigenständig tragendes Bauteil dienen.

Das speichermediumintegrierte Filtersubstrat ist vorzugsweise so im oder unter dem Speicher vorzusehen, dass es möglichst gleichmäßig vom Wasserzufluss beaufschlagt wird.

Die Anordnung des, in diesem Fall in der Regel, als Zuflussorgan dienenden vorgeschalteten Behandlungsanlage kann dazu auch tiefer wie das Filtersubstrat angeordnet sein, wenn dieser Behandlungsanlagenteil z.B. über ein Drainrohr gebildet wird, dass sich in einem Drainrohrgraben unterhalb des Versickerungsniveaus des Speichers befindet.

Zumeist wird sich das Filtersubstrat jedoch bei einer solchen Bauweise mit seinem Scheitel auf Höhe der tiefsten Drainrohrschlitze oder der Drainrohrsohle bewegen.

Die beliebig zu gestaltenden Abflusssysteme aus der Behandlungsanlage in das Speichermedium können aber auch deutlich oberhalb des Filtersubstrat angeordnet sein.

Eine vorhergehende Sedimentation sollte dabei immer vorgesehen werden.

Sind die Filtersubstrate nicht aus sich selbst heraus regenerativ, ist auch hier vorab eine Behandlung über Filtration, Abscheidung oder weitergehende Behandlungsschritte nahe zu legen.

Wie z.B. auch bei den Lamellenpaketen kann auch hier wieder in Abhängigkeit von der Filterwirkung des Filtersubstrats in Strömungsrichtung vor oder hinter diesem Filtervlies angeordnet werden.

Vor dem Filtersubstrat angeordnetes Filtervlies dient insbesondere der Verlängerung der Standzeit des Filtersubstrats, da das Filtervlies bereits viele Schadstoffe zurück halten kann, die ansonsten hätten vom Filtersubstrat abgeschieden werden müssen.

Hinter dem Filtersubstrat angeordnetes Filtervlies vermeidet u.a. das Austragen von Abbauprodukten aus dem Filtersubstrat in die nachfolgenden Anlagenbereiche oder den schützenswerten natürlichen Boden.

Um den Filtersubstraten, insbesondere den mikroorganischen Reinigungsprozessen eine gute Reinigungsleistung zu ermöglichen ist zudem eine gute Luftversorgung angeraten, da bei zu geringem oder keinem Luftaustausch die aktiveren aeroben mikroorganischen Abbauprozesse in anaerobe Prozesse umkippen können, die nicht nur weniger effektiv sondern auch mit unangenehmen Faulgerüchen einhergehen können.

Sofern der Luftvorrat in der Behandlungsanlage nicht schon aus sich heraus einen ausreichenden Luftvorrat für aerobe Prozesse liefert, kann ein Luftaustausch auch über zusätzliche Belüftungseinrichtungen sicher gestellt werden, welche in doppelter Funktion auch zugleich als Spüleinrichtungen für die Behandlungsstufe oder gar der ganzen Behandlungsanlage mit verwendet werden können.

Diese können von der Behandlungsanlage bis in die angrenzenden Schächte hinein geführt werden und dort aufgrund ihrer konstruktiven Gestaltung auf die darrüberstreichende Luft so reagieren, dass so ein permanenter Luftaustausch, wenn möglich bis in die ganze Behandlungsanlage ermöglicht wird.

In der Regel wird jedoch der Luftaustausch aufgrund der Pumpwirkung aus Wassereinstau (verbrauchte Luft wird aus dem System hinaus gedrückt) und Abfluss (frische Umgebungsluft wird eingesogen) ausreichend sein.

Außer bei den zu reinigenden Abflüssen von z. B. Metalldächern ist in den Behandlungsanlagen auch immer wieder mit über die Oberfläche abfließenden Leichtflüssigkeiten aus normalen Leckageverlusten von Kraftfahrzeugen bis hin zu großen Schadstoffmengen aus Havarien zu rechnen.

Die üblichen Kraftfahrzeugleckagen haften zumeist an den eingeschwemmten Sedimenten mit an und sind demnach spätestens mit den Filtersubstraten zurück zu halten.

Bei größeren Zuflüssen von Leichtflüssigkeiten wären diese jedoch direkt überfordert und würden zudem unbrauchbar und müssten erneuert werden. Die aus der Anlage dann ungereinigt weiterfließende Leichtflüssigkeit würde in Folge direkt tiefere Bodenschichten verseuchen, was bei Muldenversickerungen in solchen Fällen bisher immer vermieden werden konnte.

Es ist daher in einer weiteren Ausgestaltung der Erfindung vorgesehen, die Behandlungsanlagen auch mit Leichtflüssigkeitsabscheidern, vorzugsweise als Koaleszenzabscheider ausrüsten zu können.

Da diese insbesondere bei Unfällen zum Einsatz kommen müssten, ist es sinnvoll diese vorzugsweise zwischen der Sedimentation und den Filtersystemen aus Filtervliese und/oder Filtersubstrate anzuordnen, sofern solche Reinigungskomponenten in der Behandlungsanlage mit integriert sein sollten.

Natürlich kann die Behandlungsanlage auch nur aus der Leichtflüssigkeitsabscheidung oder einer Kombination von Sedimentation und Leichtflüssigkeitsabscheidung bestehen.

Die einfachste Form der Leichtflüssigkeitsabscheidung erfolgt über die Schwerkraft. Es ist demnach bereits ausreichend den Wasseraustritt aus der Behandlungsanlage unter den Anlagenscheitel zu verlegen um so zwischen Wasseraustritt und Anlagenscheitel ein Reservoir für aufschwimmende Leichtflüssigkeit zu schaffen, Funktionsprinzip einer Tauchwand, die dann über einen im Scheitel angeordneten Abfluss separat entsorgt werden kann.

Diese einfache Bauweise kann mit einem im Zufluss zum Anlagenscheitel angeordneten Koalescher zu einem Koaleszenzabscheider aufgewertet werden.

Der Koalescher kann in allen heute gebräuchlichen Bauweisen aus z.B. offenporigem Kunstsoff, Edelstahlwolle übereinander angeordneten Lamellen, usw. ausgeführt sein. Er kann senkrecht stehend, geneigt, aber auch horizontal liegend angeströmt werden, wobei eine horizontale Lage bei einer Anströmung von unten die meisten Vorteile zu versprechen scheint, da auf diese Weise sehr einfach in langgestreckten und/oder breiten Behandlungsanlagen geringer Bautiefe große Koalescher herzustellen sind.

Auch diese können wieder in montagefreundlichen Größen separiert sein, die man zu beliebig großen Einheiten in den Behandlungsanlagen zusammenführen kann.

Zur Trennung von Leichtflüssigkeitsabscheidung und Filtration sind die Anlagenteile in Reihe zu schalten, was über zusätzliche z.B. nur für ölfreies Wasser zu unterströmende Schotte unterstützt werden kann.

Das die erfindungsgemäßen, anlagenintegrierten Leichtflüssigkeitsabscheider je nach Bedarf mit den heute üblichen Ergänzungsbauteilen wie Selbstverschlussventile bei Vollfüllung, Probenahmemöglichkeiten und ähnlichem aufgerüstet werden können, versteht sich von selbst.

Wird die Behandlungsanlage in kritischen Bereichen, z.B. der Chemieindustrie eingesetzt sind oft größere Vorsichtsmaßnahmen geboten, die es verbieten das Wasser der Behandlungsanlage quasi selbst zu überlassen.

In solchen Fällen wird es Sinn machen die Anlage insgesamt zu verkapseln sprich zu ummanteln und den Abfluss nur über eine Abflussleitung zuzulassen, die ggf. bei Schadenslagen mit einem Schieber verschlossen werden kann, der handbetätigt oder automatisch auf z.B. schädliche Inhaltsstoffe im zu- oder abfließenden Wasser reagiert.

Die wohl zumeist übliche direkte Integration der Behandlungsanlage innerhalb von Speicher und/oder Rigolen mit dem erfindungsgemäßen, aus zumindest einer bis hin zu vielen Reinigungsstufen frei kombinierbaren Reinigungsverfahren, erlaubt demnach nicht nur einen Verzicht auf die bekannten Speicher und Rigolen vor- oder nachgeschalteten Abscheide-, Sedimentations-, und/oder Filterbaugruppen und/oder Muldenversickerungen sondern erlaubt aufgrund der auf diese Weise zumeist einfach herzustellenden, kompakten Behandlungsanlagen großer Leistung, eine Optimierung des Reinigungsprozesses mit einfachen Mitteln.

In den Zeichnungen sind mehrere Ausführungsbeispiele der Erfindung in Schnitten dargestellt.

Die angeführten Beispiele basieren auf nur einer Zuleitung in einen Betonschacht und nur einer Sedimentationsleitung, die hier aus einem runden Dränrohr gebildet ist.

Ebenso könnten mehrere Zuleitungen in diesem Betonschacht angeschlossen sein und mehrere Sedimentationsleitungen mit ggf. unterschiedlichen Querschnitten (groß, klein und/oder rund, kubisch, oval, polygon, etc.) von diesem abgehen, wobei auch an diesen Sedimentationsleitungen wiederum Zuflussleitungen durch Abzweiger oder Sattelstücke angeschlossen werden können.

Auf die Darstellung von Bauteilen außerhalb des Drainrohres, z.B. speichermediumintegrierte Filtersubstrate, wurde aufgrund der ausführlichen Beschreibung verzichtet.

Die dargestellte Beispielauswahl zeigt in
- Fig. 1: Behandlungsanlage zur Sedimentation im Querschnitt
- Fig. 2: Behandlungsanlage aus Fig. 1 im Horizontalschnitt
- Fig. 3: Behandlungsanlage aus Fig. 1 mit zusätzlicher Lammellensedimentation im Querschnitt
- Fig. 4: Behandlungsanlage aus Fig. 3 im Horizontalschnitt
- Fig. 5: Behandlungsanlage ähnlich Fig. 1 mit zusätzlichem Koalescher als Leichtflüssigkeitsabscheider im Querschnitt
- Fig. 6: Behandlungsanlage aus Fig. 5 im Horizontalschnitt
- Fig. 7: Behandlungsanlage aus Fig. 1 mit zusätzlichen Filtersubstratsegmenten im Querschnitt
- Fig. 8: Behandlungsanlage aus Fig. 7 im Horizontalschnitt
- Fig. 9: Behandlungsanlage aus Fig. 1 mit zusätzlicher schachtintegrierter Vorreinigung für Grobsedimente und Leichtflüssigkeiten sowie zusätzlicher Lammellensedimentation und Filtersubstratsegmenten im Querschnitt
- Fig. 10: Sedimentationsanlage aus Fig. 9 im Horizontalschnitt

Für alle Schnittdarstellungen gilt weitestgehend, dass Bauteile oberhalb der Schnittebene in strichpunktierten Linien dargestellt sind.

Die Schnittebenen können versetzt zueinander verlaufen.

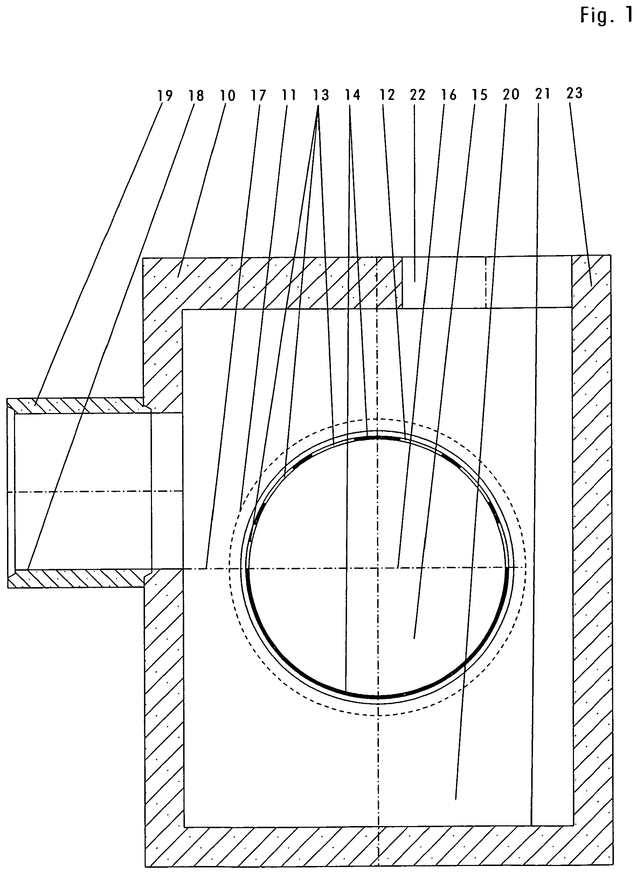

In Figur 1 ist eine Behandlungsanlage (10) dargestellt, die aus einem Betonschacht (23) und der primären Sedimentationsanlage (11) in Form eines nur über Rohrmitte (17) mit einer Drainrohrschlitzung (13) versehenem Drainrohr (12) ausgerüstet ist.

Der der Sedimentationsanlage (11) vorgeschaltete Betonschacht (23) ist in diesem Beispiel ebenfalls als sekundärer Absetzraum (20) für grobe Sedimente nutzbar.

Im oberen Bereich des Betonschachtes (23) befindet sich eine Revisionsöffnung (22) um sowohl den Betonschacht (23), das zuleitende Betonrohr (19) als auch die Sedimentationsanlage (11) zu Wartungs- und Reinigungszwecken erreichen zu können.

Die Sedimentationsanlage (11) wird im Dauerstau betrieben. Dies bedeutet, dass die in den Betonschacht (23) und Sedimentationsanlage (11) eingespülten Sedimente unterhalb der Sohlgleiche (17) in einem bis an die Betonrohrsohle (18), bzw. Sohlgleiche (17) anstehenden Wasserbad als wassergesättigter Schlamm verbleiben. Die im oberen Bereich des Drainrohres (12) angebrachte Drainrohrschlitzung (13) reicht mit ihren tiefsten Schlitzen (13) ebenfalls nur bis an die Sohlgleiche (17) heran, so das eine komplette Entleerung des über das Betonrohr (19) erfolgenden Zuflusses über die sohlgleiche Drainrohrschlitzung (13) sichergestellt ist.

Der Oberhalb der Sohlgleiche (17) im Drainrohr (12) verbleibende halbkreisförmige Querschnitt ist aufgrund des großen Durchmessers nahezu identisch mit dem vollkreisförmigen Querschnitt des im Durchmesser kleineren Betonrohres (19) um so einen rückstaufreien Zufluss vom Betonrohr (19) über den Betonschacht (23) in die Sedimentationsanlage (11) sicher zu stellen.

Über das Betonrohr (19) mit dem Wasser zufließendes Sediment trennt sich bereits im Betonschacht (19) von groben Sedimenten und lässt diese oberhalb der Schachtsohle (21) im Absetzraum (20) des Betonschachtes (23) fortschreitend nach oben anwachsen.

Leichtere Sedimente werden über die Strömung in die Sedimentationsanlage (11) weitergeleitet.

Querschnitt und Länge der Sedimentationsanlage (11) führen dort zu einer massiven Beruhigung der Strömung, die zur Sedimentation nach einigen Fachberichten einen Wert von z.B. 0,05 m/s nicht überschreiten sollte. Insgesamt betrachtet ist die beste Strömungsgeschwindigkeit für diese Erfindung jedoch von der beabsichtigten Reinigungsleistung abhängig und daher vorzugsweise anlagenspezifisch festzulegen.

Im Ergebnis sorgt das für die Sedimentationsanlage (11) zugrunde gelegte Maß an Absetzleistung für die entsprechende Anlagengröße, um so den Sedimenten in Abhängigkeit von ihrer Korngröße die entsprechende Zeit zum Absinken in den Absetzbereich (15) des Drainrohres (12) zu belassen.

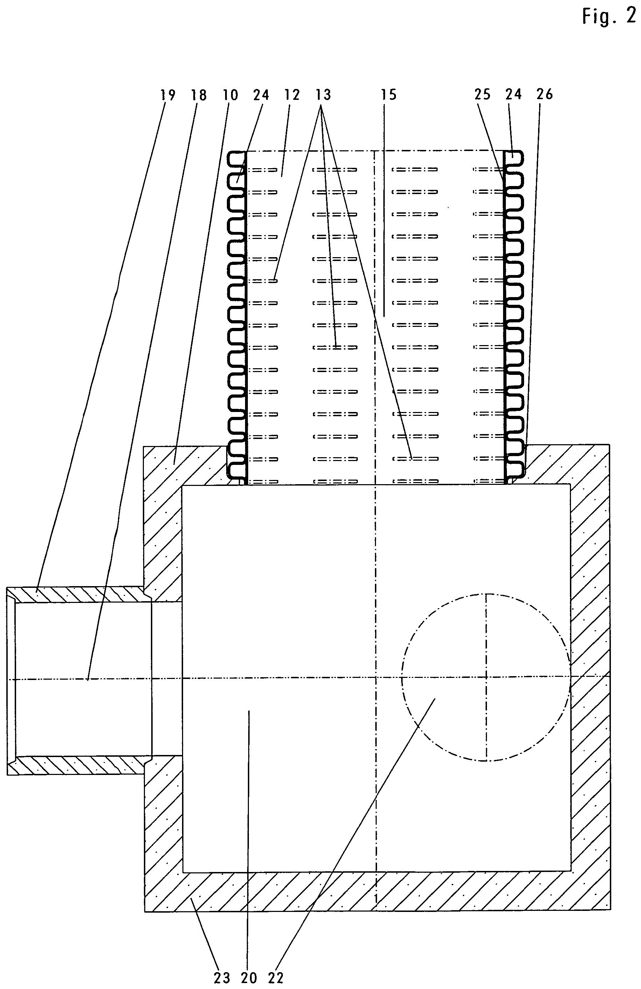

Figur 2 stellt die vorab in Figur 1 beschriebene Behandlungsanlage im höhenversetzten Horizontalschnitt dar.

Es ist von links in Zuflussrichtung kommend die Zuleitung aus einem Betonrohr (19), angeschlossen am quadratischen Querschnitt des Betonschachtes (23) mit Absetzraum (20) und dem oberhalb der Schnittebene liegende Revisionsöffnung (22) dargestellt.

In Zuflussrichtung links ist am Betonschacht (23) in einem Schachtfutter (26) eine als Drainrohr (12) ausgebildete Sedimentationsanlage (11) angeschlossen.

Das Drainrohr (12) wird hier aus einem mehrlagigen PEHD-Rohr gebildet, das zur Stabilisierung mit umlaufenden, als Wellenprofil ausgeführten Versteifungsrippen (24) versehen ist. Die mehrlagige Bauweise des Drainrohres (12) stellt zudem sicher, dass die Drainrohrinnenwand (25) als glatte und sehr gut spülfähige Rohrwandung ausgeführt werden kann.

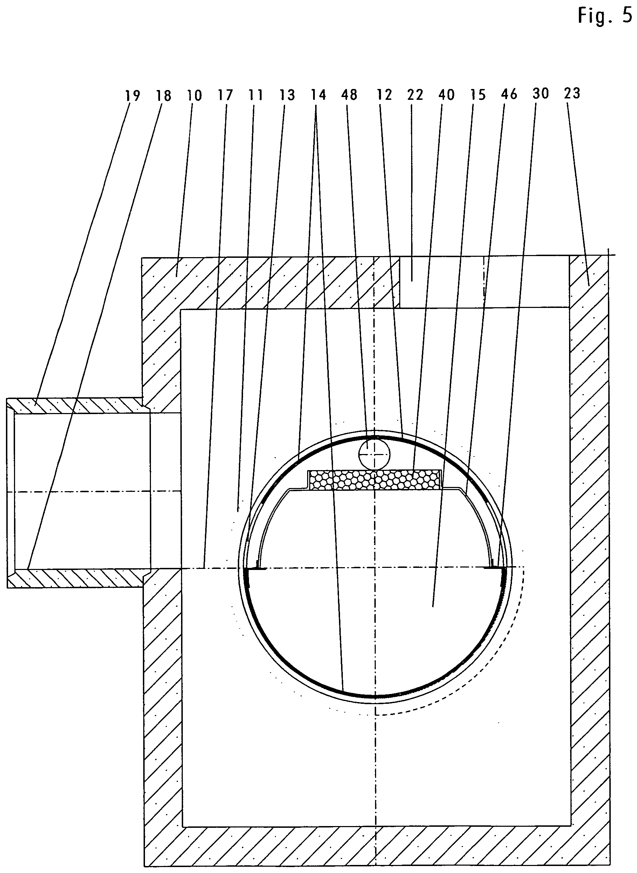

Oberhalb der Schnittebene des Drainrohres (12) ist die Drainrohrschlitzung (13) zu erkennen, die in diesem Beispiel gleichmäßig über die obere Hälfte des Drainrohres (12) sowie über die Länge verteilt wurde. Von dieser gleichmäßigen Verteilung abweichende Drainrohrschlitzungen (13) sind je nach Aufgabenstellung ebenfalls erforderlich, siehe Figur 5.

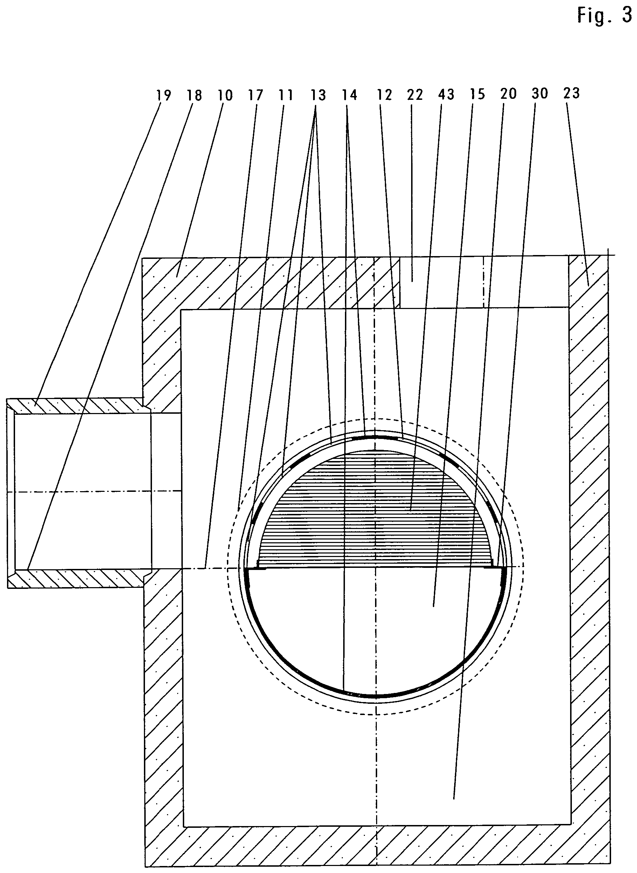

Figur 3 zeigt eine der vielen ergänzenden, bzw. untereinander kombinierbaren zusätzlichen Behandlungsverfahren, bzw. Bauteile, die in die Sedimentationsanlage (11) mit integriert werden können. Es wird ein Lamellenabscheider dargestellt, der aus vielen einzelnen Lamellenpaketen (43) gebildet wird, die, sofern nicht beim Einbau bereits fest im Drainrohr (12) installiert, auch mobil durch die Revisionsöffnung (22) in den Betonschacht (23) und von dort über die beidseitigen Schienen (30) nach einander in das Drainrohr (12) eingeschoben werden können, was zudem eine sporadische Grundreinigung der Lamellenpakete ermöglichen würde.

Die Lamellenpakete (43) sind in diesem Beispiel aus ca. 25 cm langen, 60° vom Zufluss aus ansteigenden und 2 cm übereinander angeordneten Lamellenblätter (44) gebildet, womit eine erhebliche Vergrößerung der zur Sedimentation dienenden Oberfläche von insbesondere sehr kleinen Sedimenten erzielt wird, da die Sedimente nur noch einen Absetzweg von maximal 2 cm von Lamellenblatt (44) zu Lamellenblatt (44) zurücklegen müssen, bis sie sich absetzen und an den Lamellenblättern (44) temporär haften bleiben können, bevor sie als größere Cluster später von der Strömung über den in Strömungsrichtung hinteren Rand der Lamellenblätter (44) geschoben und hinab in den Absetzbereich (15) der Sedimentationsanlage (11) absinken.

Das so teilgereinigte Wasser erreicht hinter den Lamellenblättern (44) jeweils einen Übergangsbereich (45) bis zu den nächsten übereinander angeordneten Lamellenblättern (44) wo sich der Absetzvorgang der noch im Wasser befindlichen Sedimente erneut einstellt.

Sofern sich der Wasserstrom nicht bereits planmäßig seitlich in Teilströmen aus dem Lamellenpaket (43) in Richtung des seitlichen Übergangsbereichs (45) zur Drainrohrschlitzung (13) aus den Lamellenpaketen (43) heraus bewegen kann ist spätestens am Ende einer geschlossenen Strecke aus mehreren Lamellenpaketen (43) ein Wasserübergang zur Drainrohrschlitzung (13) vorhanden.

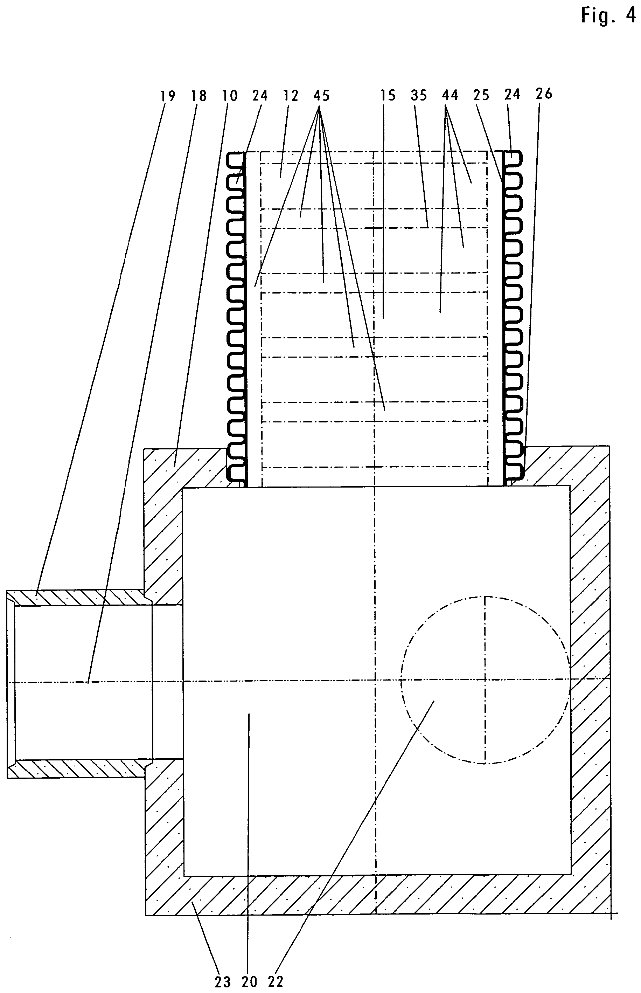

Figur 4 zeigt im Horizontalschnitt ergänzend zu Figur 2 die ins Drainrohr (12) integrierten Lamellenpakete (43), die mit ihren Stirnseiten an den Paketstößen (35) fest aneinander liegen.

Auch sind die Übergangsbereiche (45) zwischen den mit Abstand angeordneten Lamellenblättern (44), bzw. den Lamellenpaketen (43) und dem Drainrohr (12) dargestellt. Auf eine Darstellung der zu Figur 1 und 2 identischen Drainrohrschlitzung (13) wurde hier zur Vermeidung von Unklarheiten verzichtet.

Figur 5 zeigt eine weitere der vielen ergänzenden und kombinierbaren Behandlungsverfahren, bzw. Bauteile, die in die Sedimentationsanlage (11) mit integriert werden können.

Es wird ein Koaleszenzabscheider dargestellt, der aus einer dichten Halbschale (46) mit im Scheitel angeordneten flüssigkeitsdurchlässigen Koalescher (40) besteht. Der Koalescher kann aus Lamellen, offenporigem Kunststoff oder allen sonstigen geeigneten Materialien ausgeführt sein.

Mit dem Wasser eingetragene Leichtflüssigkeit muss diesen passieren um zur Drainrohrschlitzung (13) gelangen zu können.

Das einfache Funktionsprinzip der Koaleszenz durch Förderung des Zusammenfließens kolloidaler Teilchen, z.B. vieler kleiner Öltropfen die zu einem größeren akkumulieren, das so an Auftrieb gewinnt und im Wasser aufsteigen kann, bewirkt im Abfluss eine deutliche Reduzierung der durch Wasser eingeschleppten Ölmengen.

Das so abgesonderte Öl steigt unter den Scheitel des Drainrohres (12) und wird über das im Scheitel angeordnete Ölabflussrohr (48) einem im Betonschacht (23) angeordneten Ölsammler (47) zugeführt.

Um das durch die Koaleszenzstufe abgesonderte Öl nicht durch eine bis zum Scheitel des Drainrohres (12) reichende Drainrohrschlitzung (13) unkontrolliert in den Speicher oder die Rigole entweichen zu lassen ist das Drainrohr (12) beidseitig mit nur einer Reihe an Drainrohrschlitzen (13) versehen, die möglichst tief angeordnet sind. So wird oberhalb der Drainrohrschlitzung (13) ein dichtes Gewölbe innerhalb des Drainrohres (12) gebildet, wo sich das Öl sammeln und über den eigenen Auftrieb die Anlage über das Ölabflussrohr (48) verlassen kann.

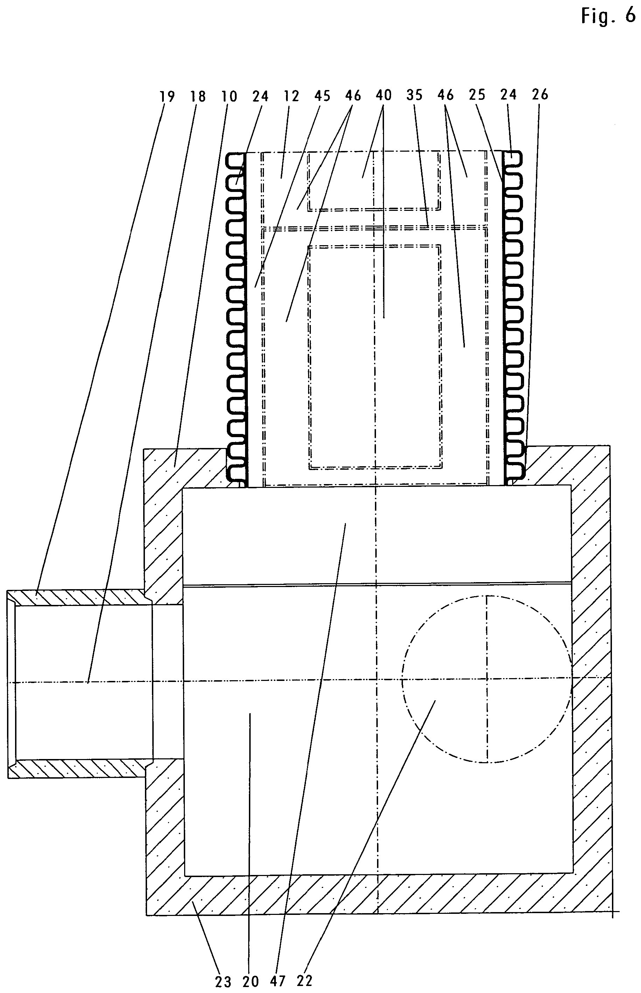

Figur 6 zeigt im Horizontalschnitt ergänzend zu Figur 2 die ins Drainrohr (12) integrierten Koaleszenzabscheiderelemente (40,46), die mit ihren Stirnseiten an den Elementstößen (35) fest aneinander liegen.

Auch sind die in Längsrichtung verlaufenden Übergangsbereiche (45) zwischen dem Drainrohr (12) und dem dazu mit Abstand angeordneten Koaleszenzabscheiderelementen (40,46) dargestellt.

Im Betonschacht (23) ist zudem der zum sonstigen Bereich abgedichtete Ölsammler (47) mit dargestellt, dem das von den Koaleschern (40) zurück gehaltene Öl über das Ölabflussrohr (48) zugeleitet wird.

Auf eine Darstellung der Drainrohrschlitzung (13) wurde hier zur Vermeidung von Unklarheiten verzichtet.

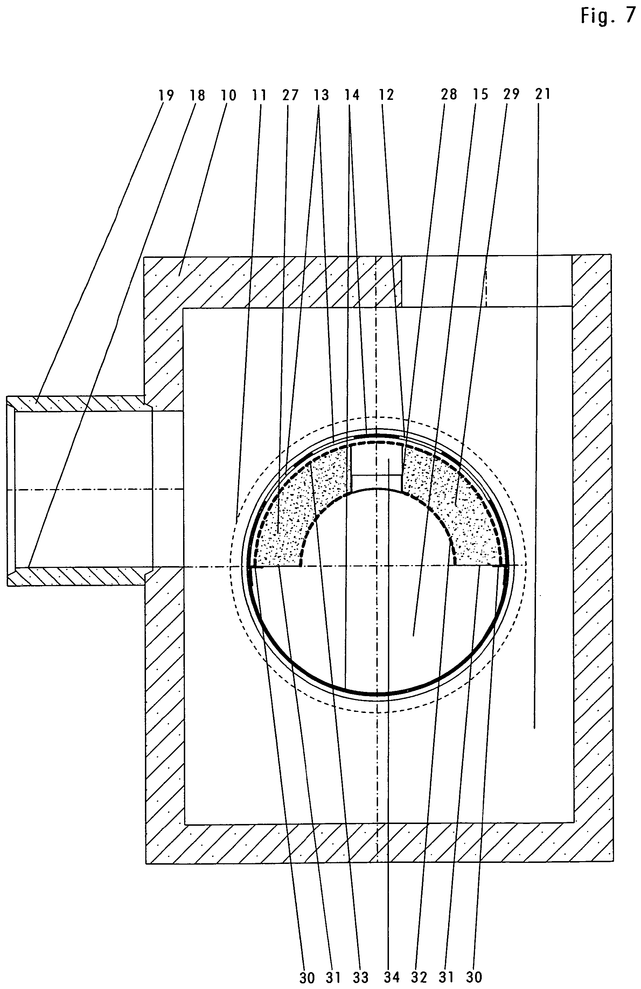

In Figur 7 wird nochmals eine weitere der vielen ergänzenden und kombinierbaren Behandlungsverfahren, bzw. Bauteile, die in die Sedimentationsanlage (11) mit integriert werden können, aufgezeigt.

Es werden mit Filtersubstrat (27) gefüllte Filterelemente (29) dargestellt, die ebenfalls als einzelne Segmente, bzw. Elemente in das Drainrohr (12) über die beidseitigen Schienen (30) eingeschoben werden können. Die in die Filterelemente (29) als Schüttgut eingefüllten oder als starre Bauteile eingesetzten Filtersubstrate (27) können je nach Aufgabenstellung ein sehr breites Reinigungsspektrum abdecken und dabei in Kombination mit der Sedimentationsanlage (11) sogar natürliche Versickerungsmulden in der Reinigungsleistung übertreffen.

Das Filtersubstrat wird in dem dargestellten Beispiel von beidseitig horizontal beginnend bis zunehmend vertikal endend nach und nach das Ganze im Filterelement (29) vorhandene Filtersubstrat (27) durchsickern. Sowohl die innere Elementfläche (32) als auch die äußere Elementfläche (33) sind wasserdurchgängig um so den Wasserdurchgang von innen über das Filtersubstrat (27) nach außen und von dort zur Drainrohrschlitzung (13) zu ermöglichen, nach dessen Passage es in den Speicher oder die Rigole gelangt. Um die Länge des Filterwegs sicherzustellen und keinen Kurzschluss zu erzielen sind die beiden Elementseiten (31) der Filterelemente (29) wasserdicht ausgeführt.

Auch wenn die Filterelemente (29) vorteilhafterweise soweit möglich von unten angeströmt werden ist über die Zeit eine zunehmende Abnahme der Filterwirkung und damit einhergehende Abdichtung der Filterelemente (29) nicht zu vermeiden.

Um dennoch die Funktion der Sedimentationsanlage (11) nicht zu beeinträchtigen, sind die Filterelemente (20) mit einer Überstauentlastung (34) im Scheitel der Filterelemente (29) ausgestattet.

Muss das Wasser zu reinigungszwecken zwingend durch die Filterelemente (29) kann die Überstauentlastung (34) mit einem Verschlussstopfen (28) ganz oder teilweise verschlossen werden.

Der teilweise Verschluss des Verschlussstopfens (28) kann zudem über ein schwimmer- oder federkraftgesteuertes System an den zunehmenden Wasserdruck angepasst werden, so dass ein zunehmender Wasserdurchlass nur ab einem vorgegebenen Druck beginnt.

Nicht in den Figuren 1 bis 10 dargestellt wurden einfache Filterelemente, die nur aus Filtervlies bestehen und ebenfalls als Halbschale mit einem entsprechenden Abstand zur Drainrohrschlitzung (13) über die beidseitigen Schienen (30) in das Drainrohr (12) hinein geschoben werden können.

Auch diese können in Abhängigkeit von der Aufgabenstellung wie für alle Filterelemente sinnvoll mit einer, ggf. wasserdruckabhängigen Überstauentlastung (34) ausgerüstet sein.

Auch ist in keinem der Horizontalschnitte der Figuren 2, 4, 6, 8, 10 dargestellt, dass sich über die Länge des Drainrohres (12), bzw. der Sedimentationsanlage (11) die Behandlungsverfahren abwechseln oder unterbrochen werden können.

So ist es durchaus sinnvoll nach einer in die Sedimentationsanlage (11) integrierten Sedimentation über Lamellenpakete (43) daran anschließend einen Bereich mit Koaleszenzabscheidern (40,46) anzuordnen und erst durch diese den Wasserzutritt zur Drainrohrschlitzung (13) zu erlauben.

Bei entsprechend langen Sedimentationsstrecken (11,12) können die einzelnen Behandlungsbaugruppen (29,40+46,43) oder deren Einzelelemente (29,40+46,43) untereinander mit insgesamt flüssigkeitsdichten Halbschalen beliebiger Länge unterbrochen, bzw. verbunden werden, um so eine Wasserbehandlung über die gesamte Länge der Sedimentationsanlage (11) besser und wirksamer verteilen zu können.

Zumal, da es bei langen Sedimentationsstrecken (11,12) keinen Sinn macht diese insgesamt mit Lamellenpaketen (43) und/oder Koaleszenzabscheidern (40,46) und/oder Vlies- oder Substratfiltern (29) auszustatten, da der hohe Wasserdurchgang, bzw. die gute Reinigungsleistung der einzelnen Behandlungsbaugruppen (29,40+46,43) nicht der gesamten Länge der Sedimentationstrecke (11,12) bedarf.

Auch kann die Drainrohrschlitzung (13) über die Länge des Drainrohres (12) deutlich variieren, was ebenfalls in den Figuren nicht ersichtlich ist. Da am Anfang der Sedimentationsstrecke die größte Strömungsgeschwindigkeit ansteht, die sich von dort bis zum Ende der Sedimentastrecke zumeist gleichmäßig auf Null reduziert, sind die Drainrohrschlitzungen (13) am Anfang zumeist weiter nach oben zu verlegen und erst am Ende der Strecke bis zum Tiefpunkt zu führen, der nur wenige Millimeter über dem maximalen Absetzraum liegen sollte. Wäre die Drainrohrschlitzung bereits im Bereich des Zuflusses auf dem niedrigsten Niveau würde dies zu einem vermeidbaren Sedimenteintrag in den Speicher- oder Rigolenkörper führen.

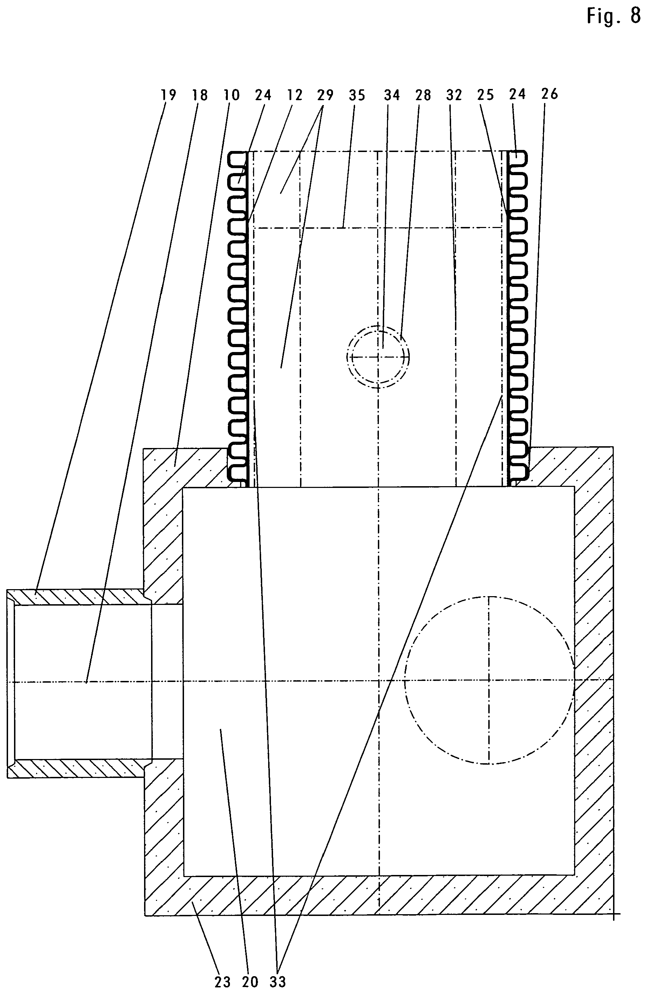

Wie bereits in den Figuren 4 und 6 gut zuerkennen war ist auch in Figur 8 ein im Grundaufbau identischer Horizontalschnitt dargestellt, der mit Filterelementen (29) gemäß Figur 7 innerhalb des Drainrohres (12) ausgerüstet ist.

Es ist der Elementstoß (35) zwischen den einzelnen Filterelementen (29) zu erkennen, sowie die beidseitig symmetrisch angeordneten inneren (32) und äußeren (33) wasserdurchlässigen Elementflächen.

In der Mitte des Filterelements (29) ist die runde Überstauentlastung (34) mit dem Verschlussstopfen (28) dargestellt.

Auf eine Darstellung der Drainrohrschlitzung (13) wurde auch hier zur Vermeidung von Unklarheiten verzichtet.

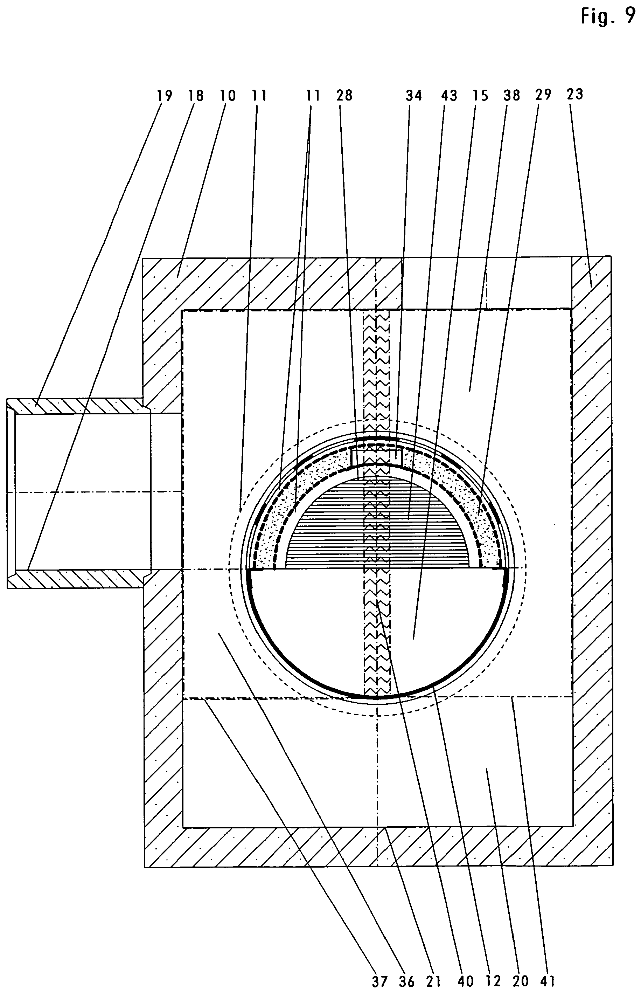

Figur 9 zeigt eine in den Betonschacht (23) integrierte Vorreinigung und eine nachfolgende über den Querschnitt des Drainrohres (12) verlaufende mehrstufige Behandlungskaskade.

Die Vorreinigung erfolgt über eine Koaleszenzstufe (40) und einen Absetzraum (20) für Sedimente. Die Koaleszenzstufe ist über eine eigenständige Vorkammer (36) mit auch nach unten über einen Vorkammerboden (37) abgedichtetem Bereich von den nachfolgenden Behandlungen separiert.

Zudem ist eine das koalierte Öl zurück haltende Tauchwand (38) vor der Sedimentationsanlage (11) installiert, so das nur weitestgehend ölfreies Wasser, das vorher über den Koalescher (40) und den Absetzraum (20) behandelt wurde durch unterfließen der Tauchwandunterkante (41) über eine Übergangskammer (42) in die Sedimentationsanlage (11) gelangen kann.

Das dem Drainrohr (12) der Sedimentationsanlage (11) zufließende Wasser trennt sich soweit möglich im dauereingestauten Absetzbereich (15) des Drainrohres (12) von schweren Sedimenten.

Das ansteigende Wasser wird zugleich zunehmend in die Lamellenpakete (43) gedrückt, wo auch kleinste Sedimente sich an den Lamellen blättern (44) absetzen können.

Nach der Passage der Lamellenpakete (43) erfolgt eine weitergehende Reinigung über Filterelemente (29) mit eingefülltem Filtersubstrat (27), die aufgrund der bereits erfolgten mehrstufigen Sedimentation (20,15,43) nicht so dick ausgelegt werden müssen wie es in Figur 7 dargestellt wurde.

Erst danach gelangt das nunmehr sehr gut vorbehandelte Wasser über die Drainrohrschlitzung (13) des Drainrohres (12) in den Speicher- oder Rigolenkörper.

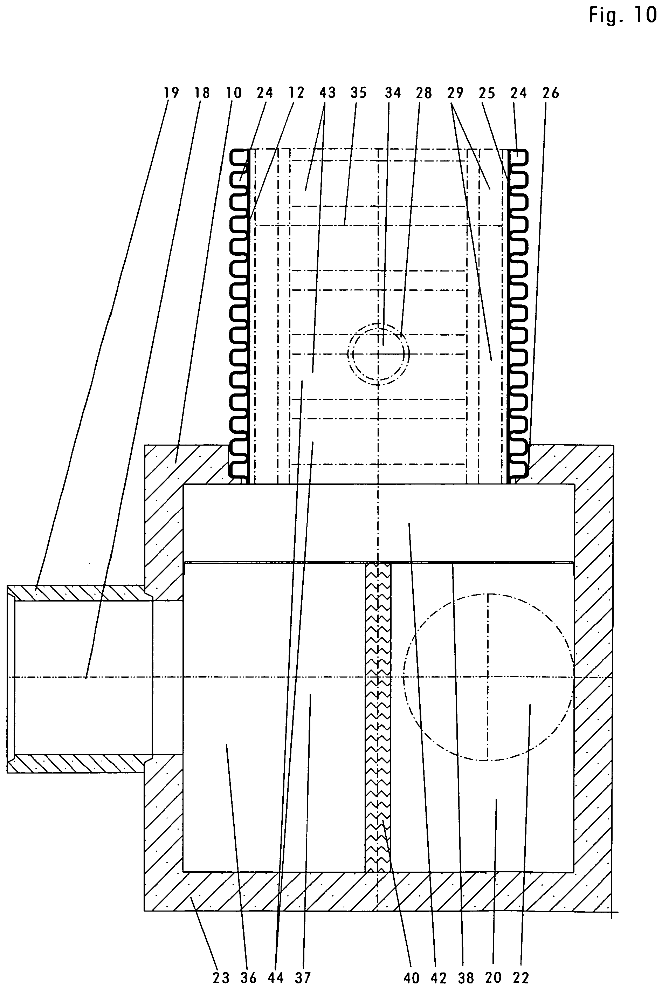

Figur 10 zeigt die vorstehende bereits ausführlich beschriebene mehrstufige Behandlungsweise aus Figur 9 im Horizontalschnitt.

Die Element- und Paketstöße (35) der in den Längenabmessungen standardisierten Filterelemente (29) und Lamellenpakete (43) sind hier überlagert vorhanden und somit als nur eine Linie erkennbar.

Auf eine Darstellung der Drainrohrschlitzung (13) wurde hier nochmals zur Vermeidung von Unklarheiten verzichtet.

### Bezugszeichenliste

- 10: Behandlungsanlage
- 11: Sedimentationsanlage
- 12: Drainrohr
- 13: Drainrohrschlitzung
- 14: ungeschlitzter Bereich
- 15: Absetzbereich
- 16: Mittleres Absetzmaximum
- 17: Sohlgleiche
- 18: Betonrohrsohle
- 19: Betonrohr
- 20: Absetzraum
- 21: Schachtsohle
- 22: Revisionsöffnung
- 23: Betonschacht
- 24: Versteifungsrippen
- 25: Drainrohrinnenwand
- 26: Schachtfutter
- 27: Filtersubstrat
- 28: Verschlussstopfen
- 29: Filterelement
- 30: Schienen
- 31: Elementseiten
- 32: Innere Elementfläche
- 33: Äußere Elementfläche
- 34: Überstauentlastung
- 35: Element- / Paketstoß
- 36: Vorkammer
- 37: Vorkammerboden
- 38: Tauchwand
- 39: -/-
- 40: Koalescher
- 41: Tauchwandunterkante
- 42: Übergangskammer
- 43: Lamellenpakete
- 44: Lamellenblätter
- 45: Übergangsbereiche
- 46: Halbschale
- 47: Ölsammler
- 48: Ölabflussrohr

## Patentansprüche

1. Unterirdische, im Erdreich verbaute Behandlungsanlage (10) für Regenwasser, welche in einer Kanalleitung oder in unmittelbarem Anschluss an die zu- und/oder ableitende Kanalleitung angeordnet ist, die eine Sedimentationsanlage (11) aufweist mit einem Drainelement (12) aus runden oder eckigen Rohren als auch aus kubischen oder polygonen Bauteilen, wobei diese aus mindestens einer Zuleitung (19) zu einem Schacht (23) mit einem Absetzraum (20) ausgeführt ist, wobei die Ableitung vom Schacht (23) in der bzw. den oberen Teilflächen der Außenwandung des Drainelements (12) wasserdurchgängig und die verbleibende untere Teilfläche der Außenwandung wasserdicht unter Bildung eines Absetzbereichs (15) ausgeführt sind und, wobei der Absetzbereich (15) im Dauerstau betrieben wird, indem die in den Schacht (23) und Absetzbereich (15) eingespülten Sedimente unterhalb der oberen wasserdurchgängigen Teilflächen der Außenwandung des Drainelements (12) im bis auf diese Höhe anstehenden Wasserbad als wassergesättigter Schlamm verbleiben und über die im oberen Bereich des Drainelements (12) angebrachte Drainrohrschlitzungen (13) verbleibende Querschnitt identisch oder größer ist als der vollkreisförmige Querschnitt der im Durchmesser kleineren Leitung (19), um so einen rückstaufreien Zufluss von der Leitung (19) über den Schacht (23) in die Sedimentationsanlage (11) sicherzustellen.

2. Behandlungsanlage (10) gemäß Anspruch 1, **dadurch gekennzeichnet, dass** die Behandlungsanlage (10) in einer in der Wandung insgesamt abgedichteten Ummantelung eingebaut ist, die zumindest von je einer Zufluss- und Abflussleitung durchbrochen ist.

3. Behandlungsanlage (10) gemäß Anspruch 1 oder 2, **dadurch gekennzeichnet, dass** die Behandlungsanlage (10) Bestandteil eines unterirdischen Wasserspeicher- und/oder Versickerungssystems ist.

4. Behandlungsanlage (10) gemäß zumindest einem der vorhergehenden Ansprüche, **dadurch gekennzeichnet, dass** die Außenwandung des Drainelements (12) oder der Drainelemente (12) im Querschnitt aus runden oder eckigen Drainrohren (12), kubischen Rigolenbaukästen (z. B. Rigo-Fill), Halbschalen (z. B. Eurofiltrator), und/oder sonstigen polygonen Bauteilen (aus z. B. Kunststoff, Beton oder Metall) herzustellen ist bzw. sind.

5. Behandlungsanlage (10) gemäß zumindest einem der vorhergehenden Ansprüche, **dadurch gekennzeichnet, dass** der Schacht (23) und/oder das Drainelement (12) bzw. die Drainelemente (12) mit zumindest einer Sedimentationsanlage (11), einem Filter (29, 43), und/oder einem Leichtflüssigkeitsabscheider (40, 46) in beliebiger Aufteilung, Anordnung und Reihenfolge auszurüsten ist bzw. sind.

6. Behandlungsanlage (10) gemäß zumindest einem der vorhergehenden Ansprüche, **dadurch gekennzeichnet, dass** der Schacht (23) und/oder das Drainelement (12) bzw. die Drainelemente (12) mindestens zwei Bereiche zur Verfügung stellt bzw. stellen, wovon ein Bereich zur Aufnahme der Sedimentationsanlage (11), einem Filter (29, 43) und/oder Leichtflüssigkeitsabscheider (40, 46) dient und ein weiterer Bereich zur Speicherung (15, 20) der über die Behandlung abgeschiedenen Stoffe zu nutzen ist bzw. sind.

7. Behandlungsanlage (10) gemäß zumindest einem der vorhergehenden Ansprüche, **dadurch gekennzeichnet, dass** sich die als Module ausgebildeten Bauteile zur Behandlung und/oder Reinigung der Behandlungsanlage (10) in die Behandlungsanlage (10) einbringen und montieren sowie später zu Revisions- und Überholungsarbeiten demontieren lassen.

8. Behandlungsanlage (10) gemäß zumindest einem der vorhergehenden Ansprüche, **dadurch gekennzeichnet, dass** zwischen mindestens einem Schacht (23) und mindestens einem Drainelement (12) und/oder mindestens zwei Drainelementen (12) mindestens eine herkömmliche Kanalleitung angeordnet ist bzw. sind.

9. Behandlungsanlage (10) gemäß zumindest einem der vorhergehenden Ansprüche, **dadurch gekennzeichnet, dass** diese mindestens eine Überstauentlastung (34) aufweist.

10. Behandlungsanlage (10) gemäß zumindest einem der vorhergehenden Ansprüche, **dadurch gekennzeichnet, dass** der Zufluss und/oder Abfluss der Behandlungsanlage direkt an einer Kanalleitung angeschlossen ist.

11. Behandlungsanlage (10) gemäß zumindest einem der vorhergehenden Ansprüche, **dadurch gekennzeichnet, dass** ein Filtervlies oder Filtersubstrat (27) innerhalb und/oder unterhalb des Speicherkörpers angeordnet ist.

12. Behandlungsanlage (10) gemäß zumindest einem der vorhergehenden Ansprüche, **dadurch gekennzeichnet, dass** das Drainelement (12) oder die Drainelemente (12) mit mindestens einem seitlichen Zufluss auszustatten ist bzw. sind.

## Claims

1. Underground treatment plant (10) for rainwater installed in the ground, which is arranged in a sewer pipe or directly connected to the inlet and/or outlet sewer pipe, comprising a sedimentation plant (11) with a drainage element (12) made of round or square pipes as well as cubic or polygonal components, which is designed with at least one supply line (19) to a shaft (23) with a settling chamber (20), wherein the discharge from the shaft (23) in the upper part or parts of the outer wall of the drainage element (12) is water-permeable and the remaining lower part of the outer wall is watertight, forming a settling area (15), and wherein the settling area (15) is operated in a permanent backwater state, in that the sediments washed into the shaft (23) and settling area (15) remain below the upper water-permeable partial surfaces of the outer wall of the drainage element (12) in the water bath up to this height as water-saturated sludge and, via the drainage pipe slots (13) attached to the upper part of the drainage element (12) is identical to or larger than the full-circle cross-sectional area of the smaller-diameter pipe (19), thereby ensuring a backflow-free inflow from the pipe (19) via the shaft (23) into the sedimentation system (11).

2. Treatment plant (10) according to claim 1, **characterized in that** the treatment plant (10) is installed in a casing that is completely sealed in the wall and is penetrated by at least one inflow and one outflow pipe.

3. Treatment plant (10) according to claim 1 or 2, **characterized in that** the treatment plant (10) is part of an underground water storage and/or infiltration system.

4. Treatment plant (10) according to at least one of the preceding claims, **characterized in that** the outer wall of the drain element (12) or drain elements (12) is made of round or square drain pipes (12), cubic trench construction kits (e.g., Rigo-Fill), half-shells (e.g., Eurofiltrator), and/or other polygonal components (e.g., made of plastic, concrete, or metal).

5. Treatment plant (10) according to at least one of the preceding claims, **characterized in that** the shaft (23) and/or the drain element (12) or drain elements (12) are equipped with at least one sedimentation plant (11), a filter (29, 43), and/or a light liquid separator (40, 46) in any distribution, arrangement, and sequence.

6. Treatment plant (10) according to at least one of the preceding claims, **characterised in that** the shaft (23) and/or the drain element (12) or drain elements (12) provide at least two areas, one of which serves to accommodate the sedimentation system (11), a filter (29, 43) and/or light liquid separator (40, 46), and another area is or are to be used for storing (15, 20) the substances separated during treatment.

7. Treatment plant (10) according to at least one of the preceding claims, **characterized in that** the components designed as modules for the treatment and/or cleaning of the treatment plant (10) can be inserted and mounted in the treatment plant (10) and later dismantled for inspection and overhaul work.

8. Treatment plant (10) according to at least one of the preceding claims, **characterized in that** at least one conventional sewer pipe is arranged between at least one shaft (23) and at least one drain element (12) and/or at least two drain elements (12).

9. Treatment plant (10) according to at least one of the preceding claims, **characterized in that** it has at least one overflow relief (34).

10. Treatment plant (10) according to at least one of the preceding claims, **characterized in that** the inflow and/or outflow of the treatment plant is connected directly to a sewer pipe.

11. Treatment plant (10) according to at least one of the preceding claims, **characterized in that** a filter fleece or filter substrate (27) is arranged inside and/or below the storage body.

12. Treatment plant (10) according to at least one of the preceding claims, **characterized in that** the drain element (12) or drain elements (12) is or are to be equipped with at least one lateral inflow.

## Revendications

1. Installation souterraine de traitement des eaux pluviales (10) enfouie dans le sol, qui est disposée dans une canalisation ou directement raccordée à la canalisation d'alimentation et/ou d'évacuation, qui comprend une installation de sédimentation (11) avec un élément de drainage (12) composé de tuyaux ronds ou carrés ainsi que d'éléments cubiques ou polygonaux, celui-ci étant réalisé avec au moins une conduite d'alimentation (19) vers un puits (23) avec une chambre de décantation (20), l'évacuation du puits (23) dans la ou les parties supérieures de la paroi extérieure de l'élément de drainage (12) étant perméable à l'eau et la partie inférieure restante de la paroi extérieure étant étanche à l'eau, formant ainsi une zone de décantation (15), et la zone de décantation (15) est exploitée en accumulation permanente, les sédiments entraînés dans le puits (23) et la zone de décantation (15) restant sous les surfaces partielles supérieures perméables à l'eau de la paroi extérieure de l'élément de drainage (12) dans le bain d'eau présent jusqu'à cette hauteur sous forme de boue saturée d'eau et étant évacués par les fentes de tuyau de drainage (13) prévues dans la partie supérieure de l'élément de drainage (12) sont identique ou supérieure à la section transversale circulaire de la conduite (19) de plus petit diamètre, afin d'assurer un écoulement sans refoulement de la conduite (19) vers l'installation de sédimentation (11) via le puits (23).

2. Installation de traitement (10) selon la revendication 1, **caractérisée en ce que** l'installation de traitement (10) est intégrée dans une enveloppe globalement étanche dans la paroi, qui est traversée au moins par une conduite d'arrivée et une conduite d'évacuation.

3. Installation de traitement (10) selon la revendication 1 ou 2, **caractérisée en ce que** l'installation de traitement (10) fait partie d'un système souterrain de stockage et/ou d'infiltration d'eau.

4. Installation de traitement (10) selon au moins l'une des revendications précédentes, **caractérisée en ce que** la paroi extérieure de l'élément de drainage (12) ou des éléments de drainage (12) est constituée, en section transversale, de tuyaux de drainage ronds ou carrés (12), de modules de rigoles cubiques (par exemple Rigo-Fill), des demi-coques (par exemple Eurofiltrator) et/ou d'autres composants polygonaux (par exemple en plastique, en béton ou en métal).

5. Installation de traitement (10) selon au moins l'une des revendications précédentes, **caractérisée en ce que** le puits (23) et/ou l'élément de drainage (12) ou les éléments de drainage (12) sont équipés d'au moins une installation de sédimentation (11), d'un filtre (29, 43) et/ou d'un séparateur de liquides légers (40, 46) dans une répartition, une disposition et un ordre quelconques.

6. Installation de traitement (10) selon au moins l'une des revendications précédentes, **caractérisée en ce que** le puits (23) et/ou l'élément de drainage (12) ou les éléments de drainage (12) comportent au moins deux zones, dont une zone sert à recevoir l'installation de sédimentation (11), un filtre (29, 43) et/ou un séparateur de liquides légers (40, 46), et une autre zone est destinée au stockage (15, 20) des substances séparées lors du traitement.

7. Installation de traitement (10) selon au moins l'une des revendications précédentes, **caractérisée en ce que** les composants conçus sous forme de modules pour le traitement et/ou le nettoyage de l'installation de traitement (10) peuvent être introduits et montés dans l'installation de traitement (10) et démontés ultérieurement pour des travaux de révision et de révision.

8. Installation de traitement (10) selon au moins l'une des revendications précédentes, **caractérisée en ce qu'**au moins une conduite conventionnelle est disposée entre au moins un puits (23) et au moins un élément de drainage (12) et/ou au moins deux éléments de drainage (12).

9. Installation de traitement (10) selon au moins l'une des revendications précédentes, **caractérisée en ce qu'**elle comporte au moins un dispositif de décharge en cas de débordement (34).

10. Installation de traitement (10) selon au moins l'une des revendications précédentes, **caractérisée en ce que** l'arrivée et/ou la sortie de l'installation de traitement sont raccordées directement à une canalisation.

11. Installation de traitement (10) selon au moins l'une des revendications précédentes, **caractérisée en ce qu'**un non-tissé filtrant ou un substrat filtrant (27) est disposé à l'intérieur et/ou en dessous du corps de stockage.

12. Installation de traitement (10) selon au moins l'une des revendications précédentes, **caractérisée en ce que** l'élément de drainage (12) ou les éléments de drainage (12) doivent être équipés d'au moins un afflux latéral.
